# EUROPEAN PATENT SPECIFICATION

(11) **EP 3 814 081 B1**
(45) Date of publication and mention of the grant of the patent: **24.01.2024**
(21) Application number: 19746167.6
(22) Date of filing: 24.06.2019
(51) Int. Cl.: B29C 45/37, B29B 11/08, B29C 45/00, B29B 11/12, B29C 49/00

(54) **A COMPONENT OF A MOLD FOR MOLDING PREFORMS, A MOLD FOR MOLDING PREFORMS AND A PROCESS FOR OBTAINING THE COMPONENT**
BAUTEIL EINER FORM ZUM FORMEN VON VORFORMEN, FORM ZUM FORMEN VON VORFORMEN UND VERFAHREN ZUR HERSTELLUNG DES BAUTEILS
COMPOSANT D'UN MOULE POUR MOULER DES PRÉFORMES, MOULE POUR MOULER DES PRÉFORMES ET PROCÉDÉ POUR OBTENIR LE COMPOSANT

(30) Priority: 27.06.2018 IT 201800006716
(43) Date of publication of application: 05.05.2021
(73) Proprietor: S.I.P.A. Società Industrializzazione Progettazione e Automazione S.p.A., 31029 Vittorio Veneto (IT)
(72) Inventor: CAVALET, Andrea, 32014 Ponte Nelle Alpi (IT); NARDER, Antonio, 31025 Santa Lucia di Piave (IT); ZOPPAS, Matteo, 31015 Conegliano (IT)
(74) Representative: Celona, Antonio
(86) International application number: PCT/IB2019/055292
(87) International publication number: WO 2020/003090

(56) References cited:
- WO-A1-2004/094130
- WO-A1-2010/047322
- WO-A1-2017/065803
- US-A1- 2009 011 157
- US-A1- 2018 117 797
- US-B2- 9 744 691
- SORGATO M ET AL: "Effect of different laser-induced periodic surface structures on polymer slip in PET injection moulding", CIRP ANNALS, ELSEVIER BV, NL, CH, FR, vol. 67, no. 1, 3 May 2018 (2018-05-03), pages 575-578, XP085416068, ISSN: 0007-8506, DOI: 10.1016/J.CIRP.2018.04.102

## Description

### Field of the invention

The present invention relates to the sector of molding of preforms of containers made of thermoplastic material, in particular of preforms for bottles, e.g. made of PET.

In particular, the present invention relates to components of a mold for injection molding or injection-compression molding such preforms.

More in detail, the invention relates to the surface features of the molding surface of the mold components.

### Background art

Bottle preforms made of thermoplastic materials are typically produced by means of an injection molding or injection-compression molding process.

In such processes, a given amount of molten thermoplastic material is injected into a mold, which imparts the shape of the preform.

An injection mold or injection-compression mold typically comprises some components which form a molding cavity, which define the outer surface of the preform, and a component which defines the inner surface of the preform, also called male component or elongated core.

To mold the preform, the male component of the mold is inserted into the molding cavity, so as to define a gap. The thickness of such gap substantially corresponds to the wall thickness of the preform.

Preform manufacturers attempt to produce preforms with ever thinner wall thicknesses. Indeed, the production of thin-walled preforms has several advantages, such as use of less material, faster process times and lower environmental impact.

However, achieving such result not trivial because of technological constraints.

In particular, the flow resistance of the molten material is increased by reducing the gap between the male component and the molding cavity. Therefore, the complete filling of the mold is compromised and higher injection pressures must be used to attempt to solve the issue. However, the use of high injection pressures also increases the general production costs, both in terms of energy consumption and in terms of use of more efficient equipment, which is therefore more expensive and requires more maintenance.

WO2017/065803A1, WO2004/094130A1, US2018/117797A1, WO2010/047322A1, SORGATO M ET AL (DOI:10.1016/J.CIRP.2018.04.102), US2009/011157A1 and US9744691 B2 represent background art which is useful to understand the invention described herein.

SORGATO M ET AL (DOI:10.1016/J.CIRP.2018.04.102) describes effect of different laser-induced periodic surface structures on polymerslip in PET injection moulding.

The disclosure of US2009011157A1 corresponds to the preamble of claim 1.

### Summary of the invention

It is an object of the present invention to provide at least one component of a mold for preforms, in particular preforms for bottles, which makes it possible to improve the flow of the molten thermoplastic material inside the mold.

It is another object of the present invention to make a mold which allows the molding of thin wall preforms.

The present invention achieves at least one of such objects, and other objects which will be apparent in light of the present description, by means of a component of a mold for molding preforms according to claim 1.

The laser-induced periodic surface structures (LIPSS) are advantageously designed to improve the flow of molten thermoplastic material within the mold.

The orientation direction extends at least partly along an X axis. The X axis is the longitudinal axis of the mold and/or the axis around which the molding surface provided with the LIPSS structures extends. In other words, in general, the orientation direction preferably goes from the bottom upwards, in particular along the X axis.

Preferably, the laser-induced periodic surface structures (LIPSS) are substantially linear or wavy, in particular along their orientation direction.

The laser-induced periodic surface structures (LIPSS) are also named ripples. The LIPSS structures preferably comprise or are preferably formed by a plurality of crests alternating with a plurality of troughs. The crests are longitudinal reliefs, which extend substantially or prevalently parallel to one another.

In the present description, the terms "substantially" and "prevalently" are used with reference to some features of the LIPSS structures.

The use of such terms is justified by reasons related to the production technology of such structures, which a person skilled in the art will be able to understand.

According to an aspect, the invention comprises a mold according to claim 8.

According to another aspect, the invention comprises a process, according to claim 9, wherein there are provided an initial component for molding preforms made of thermoplastic material; a laser source; a deflector;
the process comprising at least the step of irradiating at least one portion of the initial component by means of a laser beam emitted by the laser source and deflected by the deflector to produce said laser-induced periodic surface structures (LIPSS), substantially oriented in a same first direction.

Preferably, ultra-short laser pulses are used in the process, e.g. pulses lasting between 1 and 10 ps, preferably between 7 and 9 ps (including extreme values), e.g. about 8 ps.

Advantageously, as mentioned, the invention makes it possible to significantly reduce the flow resistance of the molten thermoplastic material.

Advantageously, according to an aspect, the invention makes it possible to reduce the preform molding cycle time.

Advantageously, according an aspect, the invention makes it possible to improve the injectability for preforms with a wall thickness comprised between 0.4 and 4 mm or between 0.4 and 2.5 mm or between 0.4 and 2 mm. In other words, the invention makes it possible to improve the injectability of the molten thermoplastic material in a mold in which the gap which defines the wall thickness of the molded preform is comprised between 0.4 and 4 mm or between 0.4 and 2.5 mm or between 0.4 and 2 mm, preferably wherein at least one portion, in particular at least one annular portion, of the gap is less than 2 mm.

Advantageously, according to an aspect, the invention makes it possible to produce thin-wall preforms, in particular having at least one portion of wall thickness of less than 2 mm.

Further features and advantages of the present invention will become more apparent in light of detailed description of preferred, but not exclusive embodiments.

The dependent claims describe particular embodiments of the invention.

### Brief description of the figures

The description of the invention refers to the accompanying drawings, which are provided by way of non-limiting example, in which:
Fig. 1 shows a section view of some components of a mold according to the invention;
Fig. 2 diagrammatically shows a perspective view of a mold according to the invention;
Figs. from 3A to 3F each show an image obtained by a scanning electron microscope (SEM) of a first, second, third, fourth, fifth and sixth example, respectively, of part of the molding surface of a component according to the invention;
Fig. 4 shows the profile of an example of LIPSS structures;
Fig. 5 shows a preform which can be obtained with a mold according to the invention;
Fig. 6 shows a perspective view of an example of component according to the invention;
Fig. 7 shows a perspective view of an example of component according to the invention;
Fig. 8 shows a perspective view of an example of component according to the invention;
Fig. 9 shows a front view of an example of a component according to the invention;
Fig. 10 shows a perspective view from the bottom of the component in Fig. 9.

The same elements or parts have the same reference numerals.

### Description of example embodiments of the invention

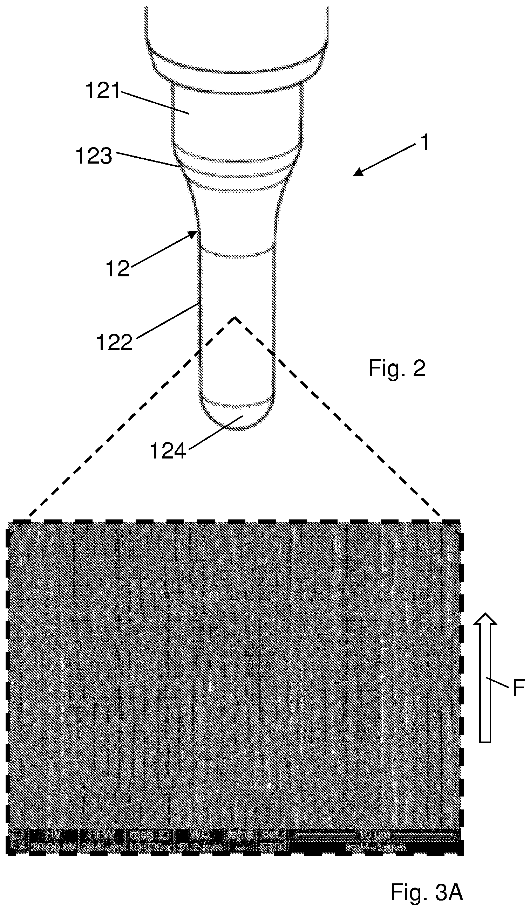

A component of a mold to mold preforms made of thermoplastic material according to the invention can be one or more of the following components in any combination:
- the component or part of the mold which defines the inner surface of the preform, i.e. which has a molding surface which molds the inner surface of the preform, preferably the inner surface of the entire preform. This part of the mold is also named male part or elongated core and is indicated in the figures by reference numeral 1; its molding surface is indicated by reference numeral 12 (Fig. 2). Preferably, the molding surface 12 comprises two substantially cylindrical, mutually coaxial surfaces 121, 122, the cylindrical surface 122 having a smaller diameter than the cylindrical surface 121; a surface 123 which joins the cylindrical surfaces 121, 122 to each other, which is tapered towards the cylindrical surface 122; an end portion 124, preferably in the shape of a spherical cap, adjacent to the cylindrical surface 122;
- the component or part of the mold which defines the outer surface of the preform neck, i.e. which has a molding surface which molds the outer surface of the preform neck, comprising the threaded portion (when provided). This part of the mold is also called the neck ring or neck insert and is indicated in the Figures by reference numeral 2. The neck insert 2 comprises two neck half-molds 2a, 2b;
- the component or part of the mold which defines the outer surface of the cylindrical portion of the preform, i.e. which has a molding surface which molds at least or only the outer surface of the cylindrical part of the preform. This part of the mold, named cavity, is indicated in the Figures by reference numeral 3;
- the component or part of the mold which defines the outer surface of the bottom portion of the preform, i.e. which has a molding surface which molds the outer surface of the bottom part of the preform. Typically, such a bottom portion of the preform comprises a cap which may be spherical or of another geometry. This part of the mold is also named gate insert and is shown in the Figures with reference numeral 4. The gate insert is typically provided with an opening 41 through which the molten thermoplastic material is injected.

Components 1, 2, 3, 4, when assembled together, are preferably coaxial to the X axis.

The molding surfaces of the aforesaid components delimit the volume in which the molten thermoplastic material flows until it fills the preform molding cavity.

The aforesaid molding surfaces are thus adapted to go into contact, in particular directly into contact, with the molten thermoplastic material when it injected into the mold.

Advantageously, the molding surface of one or more of the aforesaid components, e.g. the molding surface 12, comprises at least one surface portion provided with laser-induced periodic surface structures (LIPSS), also named LIPSS structures, which are substantially oriented in a same direction.

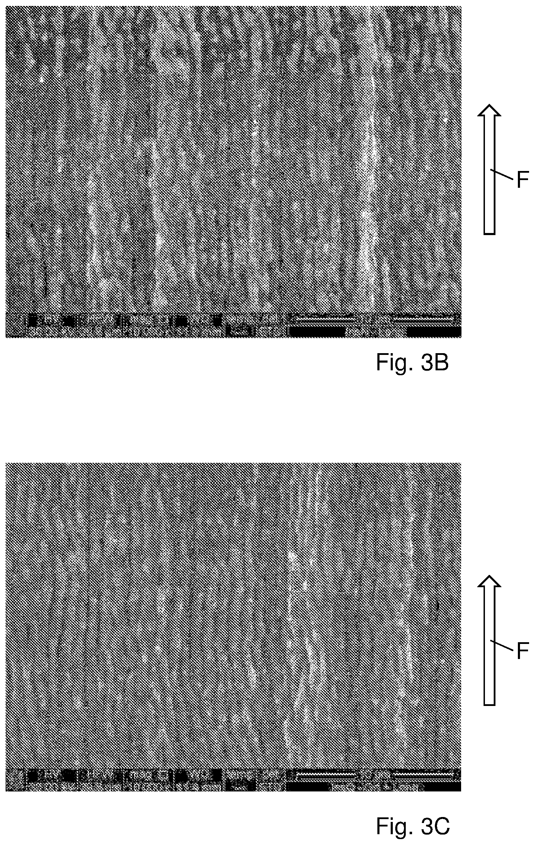

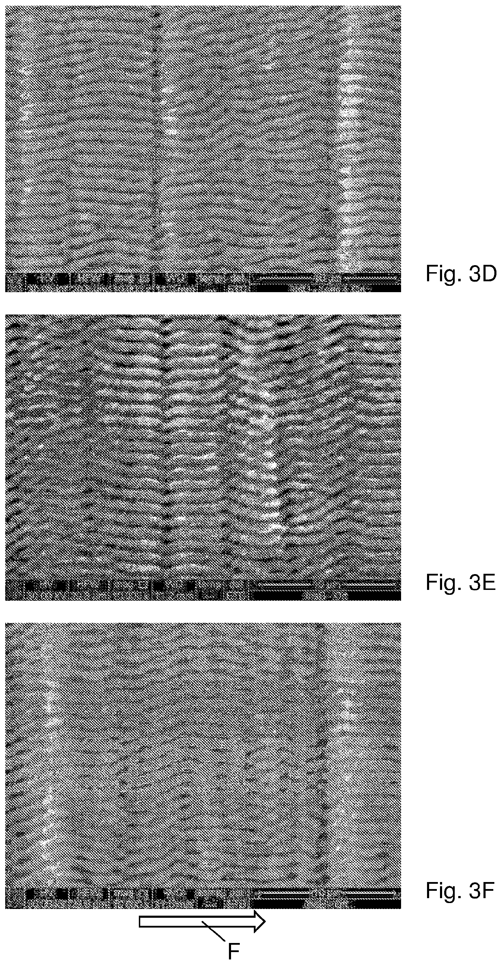

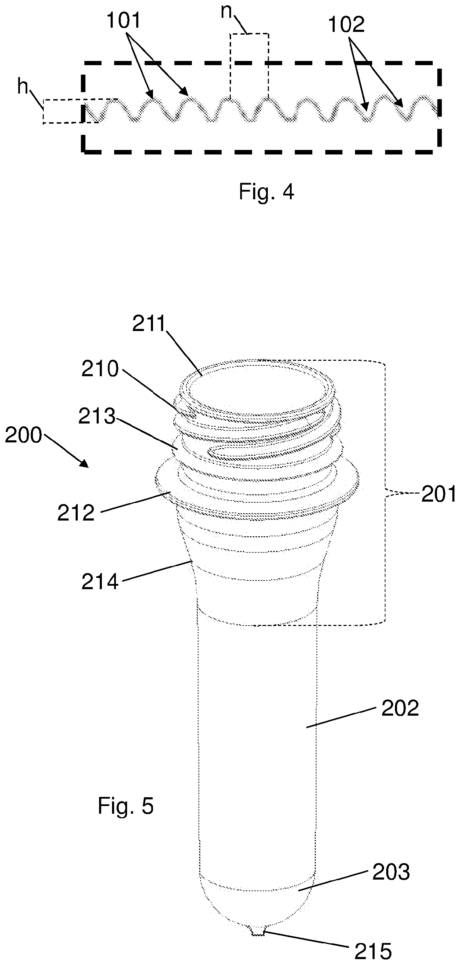

Figures 3A, 3B, 3C, 3D, 3E and 3F show a first, second, third, fourth, fifth and sixth example of the appearance of LIPSS structures in plan view from above, respectively. Fig. 4 shows another example of LIPSS structures, in which the profile of the LIPSS structures on a plane perpendicular to the orientation direction of the LIPSS structures, in particular a plane perpendicular to the arrow "F" in Figure 3, can be seen.

All the molding surface is provided with LIPSS structures.

With particular reference to Fig. 4, the LIPSS structures are formed by a plurality of crests 101 alternating with a plurality of 102 troughs.

The crests 101 and the troughs 102 are substantially parallel to one another or, in other words, are longitudinally oriented substantially or prevalently in the same direction, i.e. the said first direction.

The crests 101 and the troughs 102 are substantially linear, e.g. substantially straight, or may be substantially wavy lines.

The length, in the orientation direction, of the crests 101 and of the troughs 102 is much longer than their height "h" and width.

The crests 101 are in relief with respect to the troughs 102. In particular, the crests 101 have a height between 100 and 500 nm, preferably between 150 and 270 nm, preferably between 150 and 190 nm (including extreme values). Such height is the distance between the bottom of the troughs 102 and the top of the crests 101.

Preferably, the LIPSS structures extend substantially longitudinally parallel to the flow direction of the molten thermoplastic material, diagrammatically indicated by the arrow "F", when it is injected into the mold, or in other words are prevalently oriented in such a direction. It is worth noting that a person skilled in the art can identify the flow direction of molten thermoplastic material when it is injected into the mold. In particular, such a direction preferably goes from the gate insert 4 to the neck insert 2. For example, for surfaces which mold the cylindrical part of the preform, the LIPSS structures extend, at least partially, along the X axis, e.g. are substantially parallel to the longitudinal X axis, or central axis, of the cylinder defined by such a cylindrical surface of the respective component 1, 3. Furthermore, for example, the structures made on the end portion 124 of the male part 1 are curved, in particular curved lines, and substantially follow the outer profile of the end part 124.

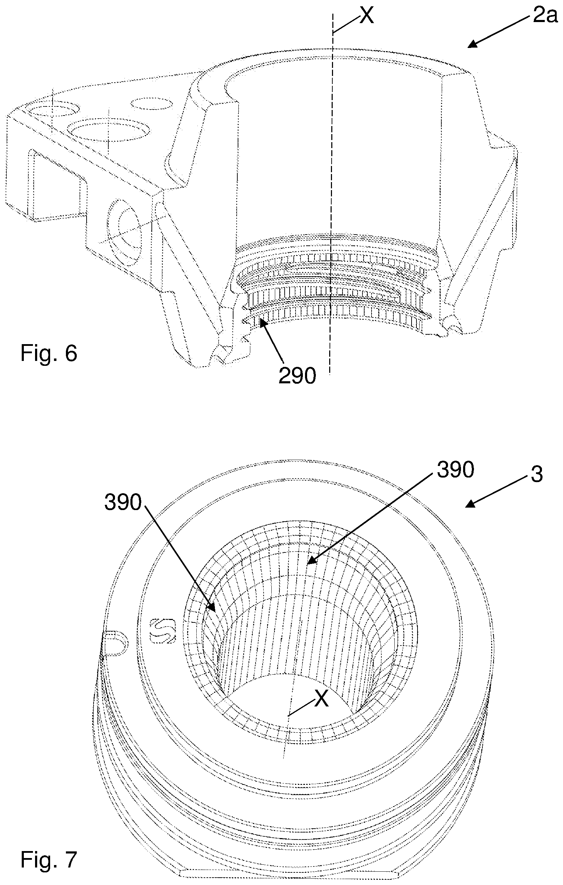

Figures 6, 7, 8, 9 and 10 show non-limiting examples of components according to the invention, in which the LIPSS structures 190, 290, 390, 490 are diagrammatically illustrated with lines which extend along a direction substantially parallel to the flow direction of the molten polymer during the molding of the preform. Preferably, such a direction goes substantially from the bottom upwards, particularly along the X axis.

Fig. 6 shows a neck half-mold 2a, configured to mold part of the outer surface of the neck of the preform. The other half-mold 2b is preferably substantially similar to half -mold 2a, preferably with the exception of the surface which molds the threaded portion (when provided) of the neck, because the neck thread of the preform is substantially spiral-shaped.

The LIPSS structures 290 preferably extend substantially along the X axis, in particular parallel to the X axis.

Figure 7 shows a component 3 configured to mold the cylindrical outer surface of the preform body.

The LIPSS structures 390 preferably extend substantially along the X axis.

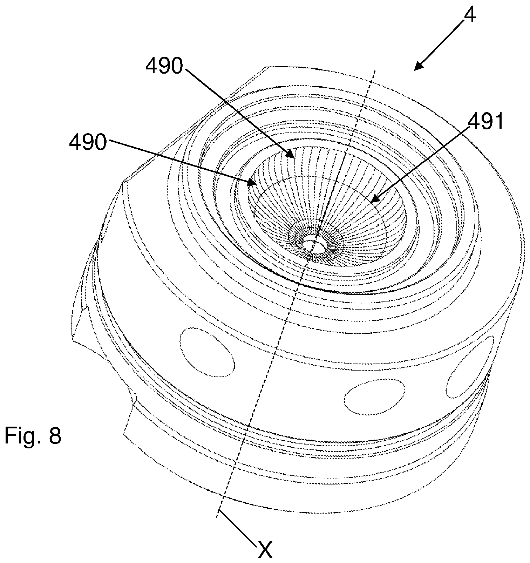

Figure 8 shows the component 4 (cavity bottom or gate insert) configured to mold the outer surface of the preform bottom.

In this case, the LIPSS structures preferably extend along a direction from the bottom towards the upper part of the component 4.

In particular, the LIPSS structures 490 extend, at least in part, transversely with respect to the X axis, in particular radially with respect to the X axis. More specifically, the LIPSS structures 490 extend transversely with respect to a circumference 491 which extends around the X axis, the circumference 491 being on a plane perpendicular to the X axis.

Note that the circumference 491 is drawn for the sake of illustration only, and component 4 is not actually provided with the circumference 491.

It is not excluded that part of the LIPSS structures of component 4 may also extend along the X axis, e.g. parallel to the X axis.

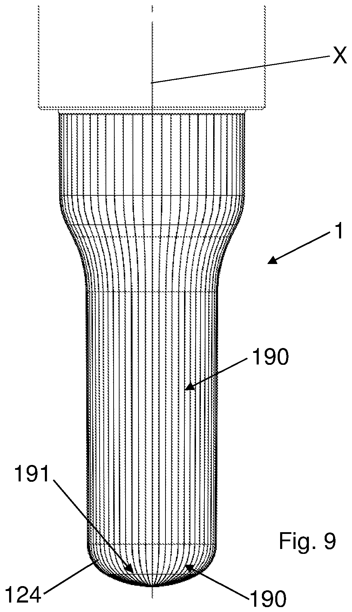

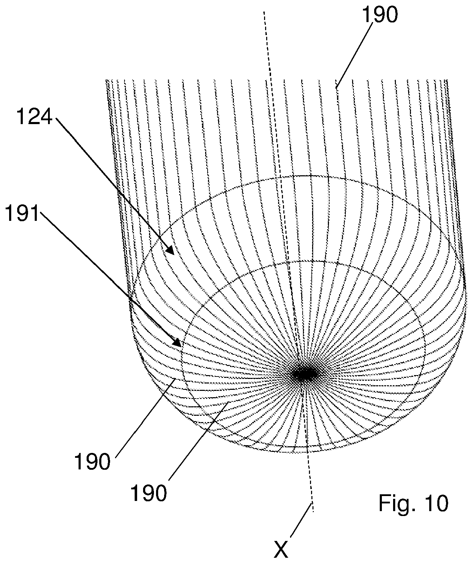

With reference to Figures 9 and 10, the component 1 configured to mold the inner surface of the preform is shown. The LIPSS structures 190 preferably extend in a direction from the end portion 124 upwards, i.e. towards the portion of component 1 that molds the inner surface of the neck.

In particular, the part of the LIPSS structures 190 present on the part of the molding surface adapted to mold the two inner cylindrical portions and the connecting portion between said two cylindrical portions, preferably extend substantially along the X axis.

Furthermore, preferably the part of the LIPSS 190 structures which is located on the end portion 124 extends preferably transversely with respect to the X axis, in particular radially with respect to the X axis.

More in particular, the LIPSS structures 190 which are on the end portion 124 extend preferably transversely with respect to a circumference 191 which extends around the X axis, the circumference 191 being on a plane perpendicular to the X axis.

Note the circumference 191 is drawn for the sake of illustration only, and component 1 is not actually provided with the circumference 191.

It has been experimentally observed that the specific orientation of the LIPSS structures, substantially parallel to the flow direction F, makes it possible to achieve optimal results because the material flow is facilitated and therefore lower injection pressures can be used.

In particular, it was found that the surfaces provided with LIPSS structures oriented in this manner allow a reduction of the injection pressure of up to about 23% compared to substantially smooth surfaces, not provided with LIPSS structures.

Preferably, component 1, 2, 3, 4 of the mold is made of steel.

Preferably, the crests have a width between 400 and 900 nm, preferably between 600 and 700 nm, along a direction (named second direction) substantially perpendicular of the first direction.

Preferably, the period "n" of the LIPSS structures is comprised between 500 and 1000 nm (including extreme values), e.g. 780 nm with a standard deviation of 60 nm. Preferably, the period "n" corresponds substantially to the pitch of the crests 101, which is the distance between corresponding or substantially corresponding points of two consecutive crests 101, along the second direction.

Preferably, but not exclusively, the average roughness of the surface portion provided with the LIPSS structures is comprised between 0.30 and 0.35 µm.

This average roughness is also indicated to in the sector as "Sa".

The features of the LIPSS structures can be measured, for example, by means of an optical profilometer, preferably in confocal mode under 100X magnification, for example; and/or by means of a scanning electron microscope (SEM); and/or by means of an atomic force microscope (AFM).

Preferably, but not exclusively, the average values of the dispersion of the orientation angle, with respect to the first direction, are between 0 and 45°, preferably between 0 and 30°, and more preferably between 0 and 26°. Preferably, but not exclusively, the LIPSS structures are low spatial frequency LIPSS (also known as LSFL) structures. In particular, the low spatial frequency type LIPSS structures have a pitch "n" lower than the wavelength λ of the laser with which they are produced. Typically, but not exclusively, such a pitch "n" is between λ/2 and λ.

Typically, but not exclusively, low spatial frequency LIPSS are produced with a fluence, i.e. energy produced by the laser per unit area, having a value between 10 and 300 J/cm², extreme values included. In particular, the fluence is the amount of energy released by a single laser pulse per unit area. Preferably, but not exclusively, the wavelength of the laser is comprised between 650 and 1100 nm. According to an aspect, the invention comprises a process to obtain a component 1, 2, 3, 4 having at least one portion of the molding surface provided with the aforesaid LIPSS structures.

The process is also called the LIPSS process.

In particular, the process makes it possible to modify a component, named initial component, having a substantially smooth molding surface, or in any case not provided with the LIPSS structures.

The initial component may be: the male part 1, and/or the neck insert 2, and/or the gate insert 4, and/or the part 3 for molding the cylindrical portion of the preform.

A laser source and a deflector are used to perform the process.

The process comprises at least the step of irradiating at least one portion of the initial component by means of a laser beam emitted by the laser source and deflected by the deflector.

During the process, the deflector may move appropriately to irradiate the part or the parts of the initial component where the LIPSS structures are intended to be made.

The laser beam is pulsating, with pulses of duration having a value between 1 and 10 ps, preferably between 7 and 9 ps, extreme values included, e.g. equal to about 8 ps; preferably a frequency having a value equal to or about equal to 1 MHZ; and a power having a value from 16 to 22 W, extreme values included. Preferably, the component is irradiated in a direction substantially perpendicular to the molding surface. Typically, the orientation direction of the crests is correlated to the polarization direction of the laser.

In particular, the crests are preferably oriented substantially orthogonally with respect to the polarization direction of the laser light. Furthermore, typically but not exclusively, the crests are oriented orthogonally to the scanning direction of the laser, the light polarization direction being substantially parallel to the scanning direction.

By way of non-limiting example, the process may be performed by means of a "Coherent HyperRapid NX" laser source, operating at a fundamental harmonic of 1064 nm with pulse duration of about 8 ps.

The deflector may, for example, be a "Raylase Focusshifter CS" scanner, provided with a lens with a focal length of 160 mm.

In some processes, the diameter of the laser beam spot was of about 30 µm.

The following table shows the process parameters of two different processes, No.1 and No.2, respectively, provided by way of non-limiting example.

| | **No.1** | **No.2** |
|---|---|---|
| Power [W] | 16 | 20 or 22 |
| Pulse duration [ps] | ≈ 8 | ≈ 8 |
| Frequency [MHz] | 1 | 1 |
| Scanning speed [mm/s] | 2500 | 2500 |
| Scanning step [µm] | 10 | 10 |
| Pulse energy [µJ] | 16 | 20 or 22 |

Preferably, but not exclusively, in order to produce the low spatial frequency LIPSS, a fluence value comprised between 10 and 300 J/cm², extreme values included, is used.

Preferably, but not exclusively, the wavelength of the laser is comprised between 650 and 1100 nm.

According to an aspect, the invention comprises a mold for molding preforms made of thermoplastic material, comprising at least one component having one or more of the features described above.

The component having all or part of its molding surface provided with the LIPSS structures is the male part 1 of the mold. Furthermore, all or part of the molding surface of the neck insert 2 and/or gate insert 4 and/or part 3 for molding the cylindrical portion of the preform can be provided with LIPSS structures.

The mold comprises a molding cavity defining a molding surface for molding the outer surface of the preform and a male part 1 having a molding surface for molding the inner surface of the preform.

Preferably, when the elongated core 1 is inserted into the molding cavity, the distance or gap between the molding surface of the molding cavity and the molding surface of the male part is between 0.4 and 4 mm, preferably between 0.4 and 2.5 mm or between 0.4 and 2 mm, extreme values optionally included. Preferably, at least one annular portion of said gap is less than 2 mm.

Such a distance substantially defines the wall thickness of the preform. Note that as a function of the design of the preform, the wall thickness, and therefore the aforesaid distance, can be different for the different zones of the preform.

By way of example only, Fig. 4 shows a preform 200 which can be obtained by means of an injection or injection-compression molding process, using a mold according to the invention, it being understood that preforms with another conformation can also be made.

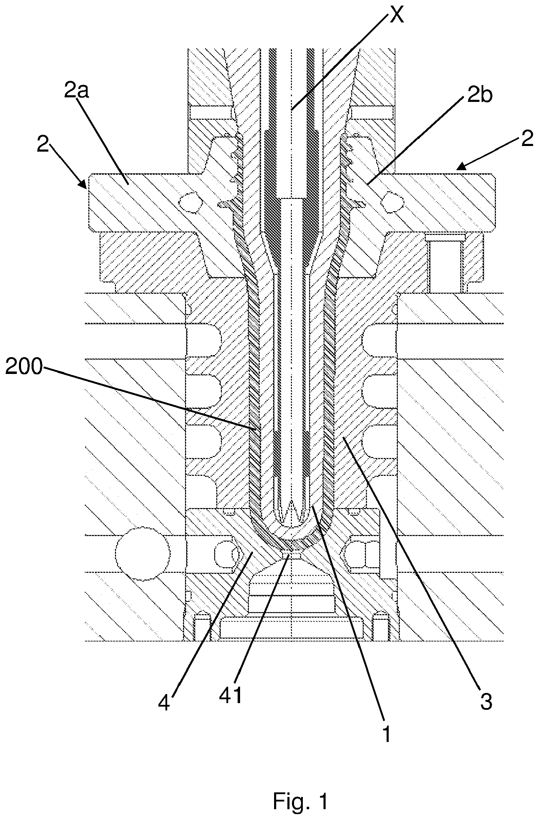

The preform 200 is also visible in section in Fig. 1.

The preform 200 comprises a neck 201, a cylindrical portion 202, an end portion 203 or bottom portion, which closes the preform 200 at the bottom.

The neck 201 comprises a portion 210, preferably threaded, which delimits an upper opening 211, opposite to the end portion 203.

The neck 201 preferably also comprises an annular flange 212, under the portion 210, which is typically used for transporting the container obtained from the preform in the production plant. Optionally, a further annular flange 213 is provided between the portion 210 and the annular flange 212, which typically serves as a support for the bottle seal.

Between the annular flange 212 and the cylindrical portion 202 there is a portion 214 tapered towards the cylindrical portion 202.

The end portion 203 is typically shaped as a spherical cap, although it may also have other shapes. At the end of end portion 203 there is typically a protuberance 215 at the injection point of the molten plastic.

The preform 200 is made of thermoplastic material, preferably polyester, e.g. polyethylene terephthalate (PET).

Preferably, the neck 201 has a wall thickness comprised between 0.4 and 2.5 mm, preferably less than, or equal to 1 mm. Furthermore, or alternatively, the body of the preform, in particular the cylindrical portion 202, has preferably a wall thickness of between 1.8 and 2 mm.

In particular, the wall thickness of the body of the preform, in particular of the cylindrical portion 202, is preferably greater than or equal to 1.6 mm, e.g. between 1.6 and 2 mm, extreme values optionally included.

## Claims

1. A component (1) of a mold for molding bottle preforms (200) made of thermoplastic material,
the component (1) comprising a molding surface (12) adapted to come into contact with the molten thermoplastic material, and configured to mold the inner surface of a bottle preform (200);
wherein the component is the male part (1) of the mold;
**characterized in that** all the molding surface (12) comprises laser-induced periodic surface structures LIPSS, substantially oriented in a same first direction,
and **in that** said first direction is substantially parallel to the flow direction of the molten thermoplastic material when injected into the mold.

2. A component (1) according to claim 1 , wherein said laser-induced periodic surface structures (LIPSS) are substantially linear or wavy along said first direction.

3. A component (1) according to any one of the preceding claims, wherein said laser-induced periodic surface structures (LIPSS) comprise or are formed by a plurality of crests (101) alternating with a plurality of troughs (102).

4. A component (1) according to any one of the preceding claims, wherein said laser-induced periodic surface structures (LIPSS) have a period (n), along a second direction substantially perpendicular to said first direction, comprised between 500 and 1000 nm.

5. A component (1) according to claim 3 or 4, wherein the crests (101) have a height comprised between 100 and 500 nm.

6. A component (1) according to claim 3, 4 or 5, wherein said crests (101) have a width, along a second direction substantially perpendicular to said first direction, comprised between 400 and 900 nm, preferably between 600 and 700 nm.

7. A mold for molding bottle preforms (200) made of thermoplastic material, comprising a component (1, 2, 3, 4) according to any one of the preceding claims.

8. A mold according to claim 7, comprising a molding cavity defining a molding surface for molding the outer surface of the bottle preform (200)
and wherein, when said component (1) is inserted into the molding cavity, the distance between the molding surface of the molding cavity and the molding surface (12) of the component (1) is comprised between 0.4 and 4 mm, preferably is comprised between 0.4 and 2.5 mm or between 0.4 and 2 mm, preferably wherein said distance, at the neck portion (201) of the bottle preform (200), is less than or equal to 1 mm.

9. A process for obtaining a component (1) according to any one of the claims from 1 to 6, wherein there are provided
- an initial component for molding bottle preforms made of thermoplastic material;
- a laser source;
- a deflector;
the process comprising at least the step of
- irradiating at least one portion of the initial component by means of a laser beam emitted by the laser source and deflected by the deflector to produce said laser-induced periodic surface structures (LIPSS), substantially oriented in the same first direction.

10. A process according to claim 9, wherein the laser beam is pulsating, with pulses having a duration of a value comprised between 1 and 10 ps, preferably between 7 and 9 ps; a power having a value comprised between 16 and 22 W; and preferably a frequency of about 1 MHz.

## Patentansprüche

1. Komponente (1) einer Form zum Formen von aus thermoplastischem Material hergestellten Flaschenvorformlingen (200),
wobei die Komponente (1) eine Formfläche (12) umfasst, die so beschaffen ist, dass sie mit dem geschmolzenen thermoplastischen Material in Kontakt kommt, und die so konfiguriert ist, dass sie die Innenfläche eines Flaschenvorformlings (200) formt;
wobei die Komponente der Steckteil (1) der Form ist,
**dadurch gekennzeichnet, dass** die gesamte Formfläche (12) laserinduzierte periodische Oberflächenstrukturen LIPSS aufweist, die im Wesentlichen in eine gleiche erste Richtung ausgerichtet sind,
und dass die erste Richtung im Wesentlichen parallel zur Fließrichtung des geschmolzenen thermoplastischen Materials verläuft, wenn dieses in die Form eingespritzt wird.

2. Komponente (1) nach Anspruch 1, wobei die laserinduzierten periodischen Oberflächenstrukturen (LIPSS) im Wesentlichen linear oder wellenförmig entlang der ersten Richtung sind.

3. Komponente (1) nach einem der vorhergehenden Ansprüche, wobei die laserinduzierten periodischen Oberflächenstrukturen (LIPSS) eine Vielzahl von Erhebungen (101) umfassen oder durch diese gebildet sind, die sich mit einer Vielzahl von Vertiefungen (102) abwechseln.

4. Komponente (1) nach einem der vorhergehenden Ansprüche, wobei die laserinduzierten periodischen Oberflächenstrukturen (LIPSS) eine Periode (n) entlang einer zweiten Richtung, die im Wesentlichen senkrecht zur ersten Richtung verläuft, zwischen 500 und 1000 nm aufweisen.

5. Komponente (1) nach Anspruch 3 oder 4, wobei die Erhebungen (101) eine Höhe zwischen 100 und 500 nm aufweisen.

6. Komponente (1) nach Anspruch 3, 4 oder 5, wobei die Erhebungen (101) in einer zweiten Richtung, die im Wesentlichen senkrecht zur ersten Richtung verläuft, eine Breite zwischen 400 und 900 nm, vorzugsweise zwischen 600 und 700 nm, aufweisen.

7. Form zum Formen von Flaschenvorformlingen (200) aus thermoplastischem Material, umfassend eine Komponente (1, 2, 3, 4) nach einem der vorhergehenden Ansprüche.

8. Form nach Anspruch 7, umfassend einen Formhohlraum, der eine Formfläche zum Formen der Außenfläche des Flaschenvorformlings (200) definiert
und wobei, wenn die Komponente (1) in den Formhohlraum eingeführt ist, der Abstand zwischen der Formfläche des Formhohlraums und der Formfläche (12) der Komponente (1) zwischen 0,4 und 4 mm, vorzugsweise zwischen 0,4 und 2,5 mm oder zwischen 0,4 und 2 mm liegt, wobei der Abstand am Halsabschnitt (201) des Flaschenvorformlings (200) vorzugsweise weniger als oder gleich 1 mm beträgt.

9. Verfahren zur Herstellung einer Komponente (1) nach einem der Ansprüche 1 bis 6, wobei vorgesehen sind
- eine Ausgangskomponente zum Formen von Flaschenvorformlingen aus thermoplastischem Material;
- eine Laserquelle;
- einen Deflektor;
wobei das Verfahren mindestens den Schritt umfasst
- Bestrahlung mindestens eines Abschnitts der Ausgangskomponente mittels eines Laserstrahls, der von der Laserquelle emittiert und durch den Deflektor abgelenkt wird, um die laserinduzierten periodischen Oberflächenstrukturen (LIPSS) zu erzeugen, die im Wesentlichen in die gleiche erste Richtung ausgerichtet sind.

10. Verfahren nach Anspruch 9, wobei der Laserstrahl pulsiert, mit einer Dauer der Pulse, die zwischen 1 und 10 ps, vorzugsweise zwischen 7 und 9 ps liegt; einer Leistung mit einem Wert, der zwischen 16 und 22 W liegt; und vorzugsweise einer Frequenz von etwa 1 MHz.

## Revendications

1. Composant (1) d'un moule de moulage de préformes de bouteilles (200) en matériau thermoplastique,
le composant (1) comprenant une surface de moulage (12) adaptée pour entrer en contact avec le matériau thermoplastique fondu, et configurée pour mouler la surface interne d'une préforme de bouteille (200) ;
dans lequel le composant est la partie mâle (1) du moule ;
**caractérisé en ce que** toute la surface de moulage (12) comprend des structures de surface périodiques induites au moyen de laser LIPSS, orientées essentiellement dans une même première direction,
et **en ce que** ladite première direction est essentiellement parallèle à la direction d'écoulement du matériau thermoplastique fondu lorsqu'il est injecté dans le moule.

2. Composant (1) selon la revendication 1, dans lequel lesdites structures de surface périodiques induites par laser (LIPSS) sont essentiellement linéaires ou ondulées le long de ladite première direction.

3. Composant (1) selon l'une quelconque des revendications précédentes, dans lequel lesdites structures de surface périodiques induites par laser (LIPSS) comprennent ou sont formées par une pluralité de crêtes (101) s'alternant avec une pluralité de creux (102).

4. Composant (1) selon l'une quelconque des revendications précédentes, dans lequel lesdites structures de surface périodiques induites par laser (LIPSS) ont une période (n), le long d'une seconde direction sensiblement perpendiculaire à ladite première direction, comprise entre 500 et 1000 nm.

5. Composant (1) selon la revendication 3 ou 4, dans lequel les crêtes (101) ont une hauteur comprise entre 100 et 500 nm.

6. Composant (1) selon la revendication 3, 4 ou 5, dans lequel lesdites crêtes (101) ont une largeur, selon une deuxième direction essentiellement perpendiculaire à ladite première direction, comprise entre 400 et 900 nm, de préférence entre 600 et 700 nm.

7. Moule pour le moulage de préformes de bouteilles (200) en matériau thermoplastique, comprenant un composant (1, 2, 3, 4) selon l'une quelconque des revendications précédentes.

8. Moule selon la revendication 7, comprenant une cavité de moulage définissant une surface de moulage pour mouler la surface externe de la préforme de bouteille (200) et dans lequel, lorsque ledit composant (1) est inséré dans la cavité de moulage, la distance entre la surface de moulage de la cavité de moulage et la surface de moulage (12) du composant (1) est comprise entre 0,4 et 4 mm, de préférence est comprise entre 0,4 et 2,5 mm ou entre 0,4 et 2 mm, de préférence dans lequel ladite distance, au niveau de la partie de col (201) de la préforme de bouteille (200), est inférieure ou égale à 1 mm.

9. Procédé pour obtenir un composant (1) selon l'une quelconque des revendications de 1 à 6, dans lequel on prévoit
- un composant initial pour le moulage de préformes de bouteilles en matériau thermoplastique ;
- une source laser ;
- un déflecteur ;
le procédé comprenant au moins l'étape de
- irradier au moins une partie du composant initial au moyen d'un faisceau laser émis par la source laser et dévié par le déflecteur pour réaliser lesdites structures de surface périodiques induites par laser (LIPSS), essentiellement orientées dans la même première direction.

10. Procédé selon la revendication 9, dans lequel le faisceau laser est pulsé, avec des impulsions ayant une durée d'une valeur comprise entre 1 et 10 ps, de préférence entre 7 et 9 ps ; une puissance ayant une valeur comprise entre 16 et 22 W ; et de préférence une fréquence d'environ 1 MHz.
